# EUROPÄISCHE PATENTSCHRIFT

(11) **EP 4 164 862 B1**
(45) Veröffentlichungstag und Bekanntmachung des Hinweises auf die Patenterteilung: **19.03.2025**
(21) Anmeldenummer: 21734065.2
(22) Anmeldetag: 14.06.2021
(51) Int. Cl.: B29C 49/78, B29C 49/06, B29C 49/42, B29C 49/46

(54) **VERFAHREN ZUR HERSTELLUNG VON BEHÄLTERN AUS VORFORMLINGEN MITTELS EINER VORRICHTUNG ZUR HERSTELLUNG VON BEHÄLTERN**
METHOD FOR PRODUCING CONTAINERS FROM PREFORMS USING A DEVICE FOR PRODUCING CONTAINERS
PROCÉDÉ DE PRODUCTION DE RÉCIPIENTS À PARTIR DE PRÉFORMES À L'AIDE D'UN DISPOSITIF DE PRODUCTION DE RÉCIPIENTS

(30) Priorität: 16.06.2020 DE 102020115854
(43) Veröffentlichungstag der Anmeldung: 19.04.2023
(73) Patentinhaber: KHS GmbH, 44143 Dortmund (DE)
(72) Erfinder: ROMMEL, Christian, 23617 Stockelsdorf (DE); KLATT, Dieter, 22147 Hamburg (DE)
(74) Vertreter: Greiche, Albert
(86) Internationale Anmeldenummer: PCT/EP2021/065924
(87) Internationale Veröffentlichungsnummer: WO 2021/254945

(56) Entgegenhaltungen:
- EP-A1- 1 100 673
- WO-A1-2005/092594
- WO-A1-96/25285
- US-A- 4 488 863
- US-A1- 2012 098 165
- US-A1- 2012 315 350
- US-A1- 2019 315 039

## Beschreibung

Die Erfindung betrifft ein Verfahren zur Herstellung von Behältern aus Vorformlingen mittels einer Vorrichtung zur Herstellung von Behältern.

Die Herstellung von Behältern kann durch das Strecken von Vorformlingen mittels einer entsprechenden Vorrichtung erfolgen. Dazu werden thermisch konditionierte Vorformlinge in einer Form unter anderem mittels eines Fluids gereckt.

Dazu kann der Vorformling, wie zum Beispiel aus der DE 10 2011 018 583 A1 bekannt, von der Vorrichtung thermisch konditioniert in eine Behälterform angeordnet werden und mittels eines Fluids und einer Reckstange gestreckt werden. Das Fluid wird mit einem Druck auf einem anfänglichen Druckniveau in den Vorformling gepresst, um den thermisch konditionierten Vorformling zu expandieren, bis er an die Wände der Form gedrückt wird. Für die finale Ausformung wird das Fluid mit einem Druck auf einem höheren Druckniveau, das über dem anfänglichen Druckniveau liegt, in den Vorformling bzw. herzustellenden Behälter gedrückt, um alle Flächen des Behälters vollständig auszuformen. Die Form ist an ein Kühlsystem angeschlossen, so dass der Behälter über den Kontakt mit der Form gekühlt werden kann, bis sich das Material so weit abgekühlt hat, dass es formstabil ist. Das höhere Druckniveau wird dabei gehalten, um den Kontakt des Behälters mit der Form sicherzustellen. Der Druck wird mittels eines Kompressors bereitgestellt.

Weiterer Stand der Technik wird in den folgenden Publikationen offenbart: US 2012/098165 A1, EP 1 100 673 A1, US 4 488 863 A, WO 2005/092594 A1, US 2019/315039 A1, WO 96/25285 A1, US 2012/315350 A1, wobei US 2012/098165 A1 ein Verfahren nach dem Oberbegriff des Anspruchs 1 offenbart.

Aufgabe der Erfindung ist es, ein Verfahren und eine Vorrichtung bereitzustellen, das kostengünstiger und energieeffizienter als der Stand der Technik ist.

Die Aufgabe wird gelöst durch die Merkmale der unabhängigen Ansprüche. Vorteilhafte Weiterbildungen sind Gegenstand der abhängigen Ansprüche sowie der folgenden Beschreibung.

Gemäß einem Aspekt der Erfindung ist ein Verfahren zur Herstellung von Behältern aus Vorformlingen mittels einer Vorrichtung zur Herstellung von Behältern, die eine Zuleitung zum Zuführen von Fluid und eine Vielzahl von Formeinheiten zur Formung von Behältern aus Vorformlingen mittels des Fluids umfasst, vorgesehen, wobei mindestens eine Formeinheit eine fluidkommunizierend mit der Zuleitung verbundene Auslassdüse zum fluidkommunizierenden Verbinden mit einer Mündung eines Vorformlings aufweist, wobei das Verfahren die folgenden Schritte umfasst: Verbinden der Mündung eines thermisch konditionierten Vorformlings mit der Auslassdüse; Erzeugen eines Druckstoßes in einer Ausformphase mit dem Fluid in dem Vorformling zum Ausformen des Behälters aus dem Vorformling, wobei der Druckstoß den Fluiddruck auf ein erstes Druckniveau treibt, das größer als oder gleich 10 bar ist, wobei der Druckverlauf des Fluids durch den Druckstoß eine Druckspitze aufweist, die bis auf das erste Druckniveau steigt; Absenken des Fluiddrucks in einer Abkühlphase bis auf oder oberhalb eines zweiten Druckniveaus, das höher ist als der Umgebungsdruck und niedriger ist als das erste Druckniveau, zum Abkühlen des Behälters in der Formeinheit; und Absenken des Fluiddrucks auf einen Umgebungsdruck zu Beginn einer Entnahmephase, zur Entnahme des Behälters aus der Formeinheit; und Absenken des Fluiddrucks auf einen Umgebungsdruck zu Beginn einer Entnahmephase, zur Entnahme des Behälters aus der Formeinheit, wobei der Schritt Erzeugen eines Druckstoßes im ersten Drittel der Zeitdauer zwischen dem Einlassen des Fluids in den Vorformling und dem Schritt Absenken des Fluiddrucks auf einen Umgebungsdruck durchgeführt wird, so dass in den beiden letzten Dritteln der Zeitdauer der Fluiddruck zwischen dem zweiten Druckniveau und dem Umgebungsdruck ist.

Damit wird mittels der Erfindung ein Verfahren zur Herstellung von Behältern aus Vorformlingen bereitgestellt, bei dem ein Fluid mittels eines Druckstoßes, der auf einem ersten Druckniveau von mindestens 10 bar ist, einen in einer Formeinheit angeordneten thermisch konditionierten Vorformling in einer Ausformphase zu einem Behälter ausformt. Das erste Druckniveau kann zum Beispiel auch zwischen 30 bar und 45 bar, vorzugsweise 35 bar, liegen. Nach dem Ausformen des Vorformlings zu einem Behälter wird der Fluiddruck auf oder oberhalb eines zweiten Druckniveaus abgesenkt, das zwischen dem Umgebungsdruck und dem ersten Druckniveau angeordnet ist. Dabei befindet sich der ausgeformte Behälter in der Abkühlphase, in der thermische

Energie, die dem thermisch konditionierten Vorformling vor dem Einlegen in die Formeinheit zugeführt wurde, aus dem Material des Behälters abgeleitet wird, damit das Material des Behälters formstabil wird. Sobald das Material des Behälters formstabil ist, wird der Fluiddruck auf den Umgebungsdruck gesenkt, damit der Behälter aus der Formeinheit entnommen werden kann. Während der Abkühlphase wird das Fluid innerhalb des ausgeformten Behälters unterhalb des ersten Druckniveaus bei einem zweiten Druckniveau gehalten, das ausreicht, um während des Abkühlens die Wände des ausgeformten Behälters an die Formeinheit zu drücken, um die Gestalt des abkühlenden Behälters zu stabilisieren. Das erste Druckniveau, das den Behälter ausgeformt, wird dabei lediglich für eine kurze Zeitspanne erreicht und gehalten. Der Druckverlauf des Fluids weist daher eine Druckspitze bzw. einen Druckpeak auf, der bis auf das erste Druckniveau steigt. Damit kann ein Kompressor, der das Fluid mit Druck beaufschlagt, kleiner und damit kostengünstiger ausgebildet werden. Weiter benötigt die Aufrechterhaltung des zweiten Druckniveau weniger Energie als eine Aufrechterhaltung des Fluiddrucks auf dem ersten Druckniveau.

Gemäß einem Beispiel kann das erste Druckniveau durch einen Strömungsdruck des Fluids und/oder einen statischen Druck des Fluids erzeugt werden.

Um das erste Druckniveau durch einen Strömungsdruck des Fluids zu erzeugen, kann das Fluid mit einem Druck in den thermisch konditionierten Vorformling eingeführt werden. Zweckmäßigerweise kann das Fluid in diesem Beispiel eine Flüssigkeit sein. Beim Auftreffen des Fluids auf die Wände des Vorformlings wird dabei ein Druck auf sie ausgeübt, der ein Recken des Vorformlings innerhalb der Formeinheit bewirkt. Sobald der Behälter ausgeformt ist, fällt der Strömungsdruck auf das zweite Druckniveau ab.

Um einen statischen Druck des Fluid zu erzeugen, kann das bereits im Vorformling angeordnete Fluid durch das Einfüllen weiteren Fluids ergänzt werden. Alternativ kann bei einem inkompressiblen Fluid das Fluid mit einem Druck beaufschlagt werden. Die Druckerzeugung erfolgt dabei so lange, bis das erste Druckniveau erreicht ist, um eine Ausformung des Behälters zu bewirken. Sobald das erste Druckniveau erreicht und der Behälter ausgeformt wurde, wird der statische Druck auf das zweite Druckniveau gesenkt, zum Beispiel indem Fluid aus dem Behälter entnommen wird oder der Druck auf das Fluid reduziert wird.

Dabei kann die Formeinheit zwischen der Zuleitung und der Auslassdüse eine erste Ventileinheit umfassen, wobei der Schritt: Absenken des Fluiddrucks in einer Abkühlphase, den folgenden Unterschritt aufweist: Verschließen der ersten Ventileinheit.

Durch das Verschließen der ersten Ventileinheit kann ein weiteres Einfüllen von Fluid, zum Beispiel eine Flüssigkeit, in den ausgeformten Behälter gestoppt werden. Ein Strömungsdruck des Fluid, der das erste Druckniveau aufweist, wird damit reduziert.

Weiter kann das Fluid zum Beispiel eine Flüssigkeit oder ein Gas, vorzugsweise Blasluft, sein.

Die Flüssigkeit kann dabei weiter der vorgesehene Inhalt des Behälters sein. Wenn das Fluid eine Flüssigkeit ist, kann die Flüssigkeit einen Strömungsdruck bewirken, wenn sie in den Vorformling eingefüllt wird. Wenn die das Fluid ein Gas ist, kann ein statischer Druck innerhalb der Vorformlings zum Ausformen bereitgestellt werden.

Der Schritt: Erzeugen eines Druckstoßes, kann weiter beispielsweise die folgenden Unterschritte aufweisen: Einleiten des Fluids mit einem Vor-Druckniveau, das geringer als das erste Druckniveau ist, in den Vorformling; und Erzeugen des Druckstoßes in dem im Vorformling angeordneten Fluid mittels einer Druckstoßeinheit.

Während des Einleitens des Fluids mit dem Vor-Druckniveau wird der thermisch konditionierte Vorformling innerhalb der Formeinheit gereckt. Dabei werden die Wände des Vorformlings so weit gestreckt, dass der Vorformling einen Hohlraum der Formeinheit ausfüllt. Um die Wände des gereckten Vorformlings mit genügend großer Kraft an die Formeinheit zu drücken, wird ein Druckstoß erzeugt, der auf dem ersten Druckniveau ist. Damit wird der Vorformling in der Formeinheit zu einem Behälter ausgeformt. Der Druckstoß kann mittels einer Druckstoßeinheit bewirkt werden. Das Verwenden der Druckstoßeinheit bewirkt, dass ein Kompressor zum Erzeugen des Fluiddrucks den Druckstoß nicht erzeugen muss und entlastet wird. Der Kompressor kann damit mit geringerer Leistung ausgelegt werden, wodurch die Kosten des Kompressors gesenkt werden.

Gemäß einem weiteren Beispiel kann das Vor-Druckniveau dem zweiten Druckniveau entsprechen.

In diesem Beispiel wird der Fluiddruck außer innerhalb der Ausformphase auf dem zweiten Druckniveau gehalten. Innerhalb der Ausformphase wird der Fluiddruck mittels eines Druckstoßes kurzzeitig auf das erste Druckniveau angehoben.

Bei einer Vorrichtung zur Herstellung von Behältern, wobei die Vorrichtung eine Zuleitung zum Zuführen von Fluid aus einer Druckerzeugungsvorrichtung und eine Vielzahl von Formeinheiten zur Formung von Behältern aus einem Vorformling mittels des Fluids umfasst, wobei mindestens eine Formeinheit eine fluidkommunizierend mit der Zuleitung verbundene Auslassdüse zum fluidkommunizierenden Verbinden mit einer Mündung eines Vorformlings aufweist, ist erfindungsgemäß vorgesehen, dass die Vorrichtung eine Steuereinheit zum Durchführen des Verfahrens nach einem der vorangegangenen Ansprüche aufweist.

Vorteile und Wirkungen sowie Weiterbildungen der Vorrichtung ergeben sich aus den Vorteilen und Wirkungen sowie Weiterbildungen des oben beschriebenen Verfahrens. Zur Vermeidung von Wiederholungen wird daher in dieser Hinsicht auf die vorangegangene Beschreibung verwiesen.

Dabei kann gemäß einem Beispiel die mindestens eine Formeinheit mindestens eine fluidkommunizierend mit der Zuleitung und der Auslassdüse einer Formeinheit verbundene und von der Steuereinheit ansteuerbare Druckstoßeinheit zum Erzeugen des Druckstoßes aufweisen.

Die Druckstoßeinheit erzeugt in diesem Beispiel in der Ausformphase mittels des Fluids einen Druckstoß des Vorformlings, um den Behälter auszuformen. Der Druckstoß wird damit nicht mittels des Kompressors erzeugt, sodass der Kompressor kleiner und damit kostengünstiger ausgelegt werden kann.

Die Druckstoßeinheit kann z. B. zum Verringern eines Volumens zwischen der Zuleitung und der Auslassdüse ausgebildet sein.

Das in dem Volumen befindliche Fluid wird damit zumindest teilweise in Richtung der Auslassdüse gedrückt und erhöht, während das Volumen verringert wird, den Druck des in dem Vorformling angeordneten Fluids auf das erste Druckniveau. Mit dem Verringern des Volumens mittels der Druckstoßeinheit kann einfach und kostengünstig ein Druckstoß auf das erste Druckniveau bereitgestellt werden.

Weiter kann die Vorrichtung zum Beispiel eine von der Steuereinheit steuerbare erste Ventileinheit zwischen der Druckstoßeinheit und der Auslassdüse aufweisen.

Mit der ersten Ventileinheit kann eine Verbindung zwischen der Druckstoßeinheit und der Auslassdüse geöffnet und geschlossen werden. Damit können die Druckstoßeinheit und die Zuleitung von der Auslassdüse getrennt werden, so dass eine Entnahme des Vorformlings aus der Formeinheit vereinfacht wird.

Die Vorrichtung kann beispielsweise zwischen der Zuleitung und der Druckstoßeinheit eine von der Steuereinheit steuerbare zweite Ventileinheit aufweisen.

Mit der zweiten Ventileinheit kann gesteuert werden, wann und wie viel Fluid aus der Zuleitung in die Druckstoßeinheit eingeführt wird. Auf diese Weise kann die Druckstoßeinheit bei der ersten Verwendung mit Fluid "aufgeladen" und Fluid mit einem hohen Druck in der Druckstoßeinheit vorgehalten werden. Das unter dem hohen Druck stehende Fluid in der Druckstoßeinheit kann zum Beispiel einen Druck aufweisen, der mindestens dem ersten Druckniveau entspricht. Weiter kann dieses Fluid gezielt dann mittels der Druckstoßeinheit in den Vorformling eingeleitet werden, wenn der Behälter ausgeformt werden soll. Nach dem Druckstoß kann das Fluid z. B. zurück in die Druckstoßeinheit bewegt werden, um für den nächsten Druckstoß gelagert zu werden.

Weiter kann die Druckstoßeinheit gemäß einem anderen Beispiel ein mittels eines Kolbens reduzierbares Volumen aufweisen, das fluidkommunizierend zwischen der Auslassdüse und der Zuleitung angeordnet ist.

Die Druckstoßeinheit kann damit den Druckstoß mittels des Kolbens bewirken. Der Kolben reduziert dabei das Volumen und drückt dabei das in dem Volumen angeordneten Fluid durch die Auslassdüse in den Vorformling. Durch die fluidkommunizierende Verbindung des Volumens zwischen der Zuleitung und der Auslassdüse kann während des Einströmens des Fluids in den Vorformling das Volumen reduziert werden, um dynamisch einen Druckstoß auf das erste Druckniveau zu bewirken. Ein Zurückziehen des Kolbens in eine Ausgangsposition beendet den Druckstoß.

Dabei kann der Kolben z. B. einen elektrischen Antrieb, vorzugsweise einen Servomotor, aufweisen.

Mit dem elektrischen Antrieb wird ein einfach zu installierender und einfach zu bedienender Antrieb für den Kolben bereitgestellt. Weiter kann der elektrische Antrieb den Kolben mit kurzer Reaktionszeit mit hoher Geschwindigkeit bewegen.

Alternativ kann jedoch eine andere Motorart für die Bewegung des Kolbens vorgesehen werden.

Die Vorrichtung kann weiter beispielsweise einen fluidkommunizierend mit der Auslassdüse verbundenen Fluidablass aufweisen, der mittels einer von der Steuereinheit steuerbaren dritten Ventileinheit verschließbar ist.

Mit dem Fluidablass kann Fluid aus dem Vorformling oder Behälter ausgelassen werden, um dem Fluiddruck innerhalb des Vorformlings oder Behälters zu senken. Der Fluidablass wird dabei mittels der dritten Ventileinheit geöffnet oder geschlossen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen
- Fig. 1: eine schematische Darstellung der Vorrichtung zur Herstellung von Behältern;
- Fig. 2: eine schematische Darstellung einer Formeinheit mit einer Druckstoßeinheit und weiteren Komponenten;
- Fig. 3: ein Flussdiagramm für das Verfahren zur Herstellung von Behältern aus Vorformlingen; und
- Fig. 4: ein Diagramm mit beispielhaften Verläufen des Fluiddrucks im Vorformling.

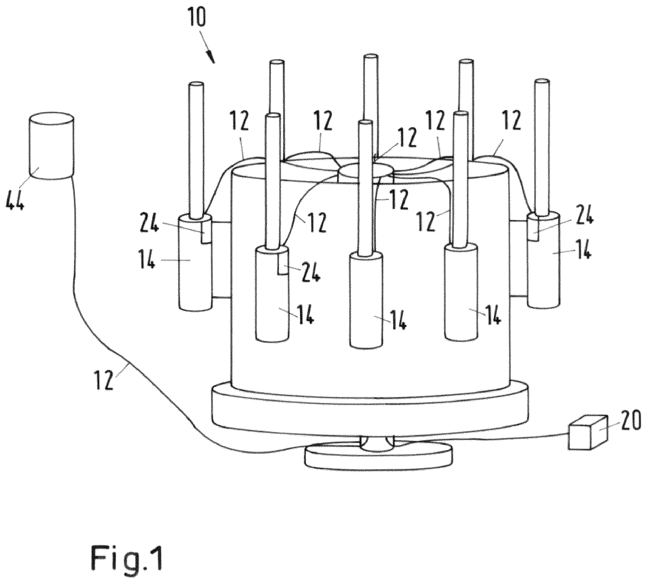

Im Folgenden wird zunächst die Vorrichtung zur Herstellung von Behältern erläutert bevor auf das Verfahren zur Herstellung von Behältern eingegangen wird. Die Vorrichtung zur Herstellung von Behältern wird dabei, wie in Figur 1 dargestellt, mit dem Bezugszeichen 10 referenziert.

Die Vorrichtung 10 umfasst eine Zuleitung 12 zum Zuführen von Fluid und eine Vielzahl von Formeinheiten 14, mit denen Behälter aus einem Vorformling geformt werden können. Jede der Formeinheiten 14 ist mit der Zuleitung 12 verbunden. Die Zuleitung 12 verbindet die Formeinheiten mit einer Druckerzeugungsvorrichtung 44, die z. B. ein Kompressor sein kann.

Die Druckerzeugungsvorrichtung 44 stellt über die Zuleitung 12 den Formeinheiten 14 ein unter Druck stehendes Fluid bereit, mit dem ein Vorformling in einer Formeinheit 14 zu einem Behälter gereckt werden kann.

Weiter weist jede Formeinheit 14 in diesem Beispiel eine optionale Druckstoßeinheit 24 zum Erzeugen eines Druckstoßes auf, die von einer Steuereinheit 20 ansteuerbar ist. Mit der Druckstoßeinheit 24 kann das über die Zuleitung 12 eingeleitete unter Druck stehende Fluid kurzzeitig mit einem höheren Druck in die Formeinheit 14 eingeleitet werden.

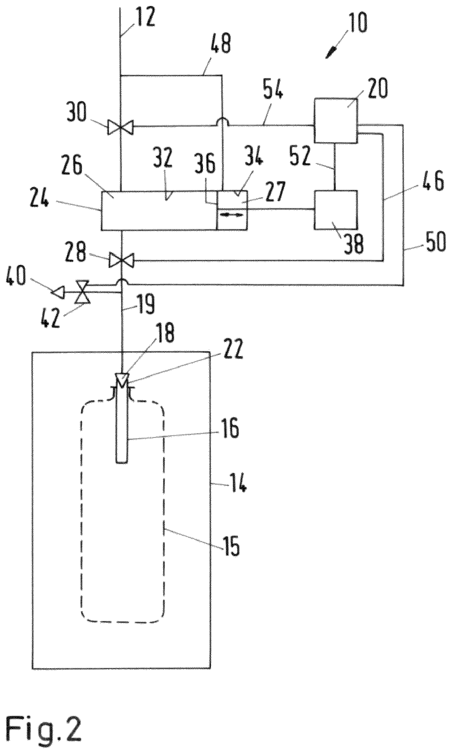

Figur 2 zeigt eine Detaildarstellung der Formeinheit 14 und der Druckstoßeinheit 24.

Die Formeinheit 14 weist einen Hohlraum 15 auf, der die Form eines herzustellenden Behälters aufweist. In dem Hohlraum 15 der Formeinheit 14 ist ein Vorformling 16 angeordnet. Die Mündung 22 des Vorformlings 16 ist dabei mit der Auslassdüse 18 verbunden, sodass die Auslassdüse 18 durch die Mündung 22 ein Fluid in den Vorformling 16 einfüllen kann.

Der Hohlraum 15 ist fluidkommunizierend über eine Auslassdüse 18 und einer Leitung 19 mit der Druckstoßeinheit 24 verbunden. Wenn ein Vorformling 16 in den Hohlraum 15 eingesetzt wird, ist der

Vorformling 16 mit fluidkommunizierend mit der Auslassdüse 18 verbunden. Weiter ist die Druckstoßeinheit 24 fluidkommunizierend mit der Zuleitung 12 verbunden. Weiter ist der Hohlraum 15 fluidkommunizierend mit mindestens einem Entlüftungsauslass in die Umgebung verbunden (nicht dargestellt). Wenn der Vorformling 16 in dem Hohlraum 15 expandiert wird, kann die aus dem Hohlraum 15 durch den expandierenden Vorformling 16 verdrängte Luft durch den mindestens einen Entlüftungsauslass in die Umgebung entweichen.

Über eine erste Ventileinheit 28 kann die Leitung 19 geöffnet und verschlossen werden. Die erste Ventileinheit 28 ist mittels einer Signalverbindung 46 mit der Steuereinheit 20 verbunden und durch sie ansteuerbar.

Die Druckstoßeinheit 24 umfasst einen Kolben 36, der mittels eines Antriebs 38 in der Druckstoßeinheit 24 hin und her beweglich ist. Der Antrieb 38 kann zum Beispiel ein Servomotor sein und über eine Signalverbindung 52 von der Steuereinheit 20 angesteuert werden. In einem anderen Beispiel kann der Antrieb 38 ein Linearmotor oder ein anderer Motor sein.

Der Kolben 36 trennt einen Innenraum der Druckstoßeinheit 24 in eine erste Kammer 32 und eine zweite Kammer 34. Durch eine Bewegung des Kolbens 36 in der Druckstoßeinheit 24 werden die Volumina der beiden Kammern 32, 34 verändert. Das Volumen 26 der ersten Kammer 32 ist fluidkommunizierend mit der Zuleitung 12 und der Leitung 19 verbunden. Die Zuleitung 12 kann dabei über eine zweite Ventileinheit 30 von der ersten Kammer 32 getrennt werden. Die zweite Ventileinheit 30 ist über die Steuereinheit 20 über die Signalverbindung 54 ansteuerbar.

Das Volumen 27 der zweiten Kammer 34 ist über eine Leitung 48 mit der Zuleitung 12 fluidkommunizierend verbunden.

Bei der ersten Inbetriebnahme werden beide Kammern 32, 34 über die Zuleitung 12 bzw. die Zuleitung 48 mit dem unter Druck stehenden Fluid aus der Druckerzeugungseinheit 44 befüllt. Die erste Kammer 32 mit dabei nur dann erfüllt, wenn die zweite Ventileinheit 30 geöffnet ist. Auf beiden Seiten des Kolbens 36 ist daher eine mit Fluid gefüllte Kammer angeordnet.

Nach dem Befüllen der zweiten Kammer 34 mit Fluid wird bei einer Bewegung des Kolbens 36, die das Volumen 27 der zweiten Kammer 34 vergrößert und das Volumen 26 der ersten Kammer 32 verkleinert, weiteres Fluid aus der Zuleitung 12 über die Leitung 48 in die zweite Kammer 34 eingeleitet. Der Druck in der zweiten Kammer 34 bleibt konstant. Umgekehrt wird Fluid aus der zweiten Kammer 34 in die Leitung 48 und damit in die Zuleitung 12 gedrückt, wenn die zweite Kammer 34 durch die Bewegung des Kolbens 36 verkleinert wird.

Zum Erzeugen eines Druckstoßes während des Befüllens des Vorformlings wird die erste Ventileinheit 28 geöffnet und die zweite Ventileinheit 30 geschlossen. Der Kolben 36 wird aus einer Anfangsposition heraus derart bewegt, dass das Volumen 26 verkleinert wird.

Bei der Verkleinerung des Volumens 26 wird das in der Druckstoßeinheit 32 angeordnete Fluid über die Leitung 19 durch die Auslassdüse 18 in den Vorformling 16 gedrückt. Dabei wird ein Druckstoß erzeugt, der den Fluiddruck in dem Vorformling auf ein erstes Druckniveau treibt. Der Vorformlinge 16 kann dabei bereits gereckt worden sein und bereits an die Wände des Hohlraums 15 angrenzen, ohne komplett zu einem Behälter ausgeformt zu sein.

Mittels des Druckstoßes durch das Reduzieren des Volumens 26 wird der Druck in dem Vorformling 16 weiter erhöht und die Wände des Vorformlings mit größerem Druck an die Wände des Hohlraums 15 gedrückt, um den Vorformling 16 vollständig zu einem Behälter auszuformen. Sobald der Kolben 36 die Kammer 32 auf ihre minimale Größe reduziert hat, erreicht der Druckstoß sein Maximum und der Fluiddruck erreicht das erste Druckniveau. Der Kolben 36 wird dann wieder in die Anfangsposition zurückgefahren. Dabei wird der Fluiddruck von dem ersten Druckniveau gesenkt und der Druckstoß beendet.

Nach dem Ende des Druckstoßes kann die erste Ventileinheit 28 mittels der Steuereinheit 20 geschlossen werden. Die Leitung 19 weist dabei einen Fluidablass 40 auf, der über eine dritte Ventileinheit 42 mit der Leitung 19 verbunden ist. Die dritte Ventileinheit 42 kann über eine Signalverbindung 50 von der Steuereinheit 20 angesteuert werden. Sobald der Behälter ausgeformt ist und die erste Ventileinheit 28 geschlossen ist, wird die dritte Ventileinheit 42 geöffnet und das Fluid über den Fluidablass 40 abgelassen, bis ein zweites Druckniveau erreicht wird.

Weiter kann die zweite Ventileinheit 30 wieder geöffnet werden, um Fluid für die Ausformung des nächsten Vorformlings bereitstellen zu können. Nach dem ersten Befüllen der Kammern 32, 34 müssen diese nicht erneut befüllt werden, solange das Fluid aus ihnen nicht abgelassen wird.

Die Signalverbindungen 46, 50, 52 und 54 können kabellose Signalverbindungen oder Kabelverbindungen sein.

Die Druckstoßeinheit 24 kann in einem anderen nicht dargestellten Ausführungsbeispiel eine Kammer mit flexiblen Wänden aufweisen, wobei die flexiblen Wände stoßartig zusammengedrückt werden können, um das Volumen 26 der Kammer zur Erzeugung des Druckstoßes zu reduzieren.

Durch das Verwenden des Volumens 26 der Kammer 32 zur Erzeugung des Druckstoßes, wird bei einem gasförmigen Fluid, das für den Druckstoß verwendete Fluid nach dem Druckstoß wieder in der Kammer 32 gespeichert. Dieses Fluidvolumen muss daher lediglich ein Mal zur Verfügung gestellt werden und kann für alle nachfolgenden Formprozesse wiederverwendet werden. Dies erhöht die Energieeffizienz und reduziert die Kosten der Herstellung von Behältern aus Vorformlingen.

In einem weiteren Beispiel (nicht dargestellt) kann für das Erzeugen des Vor-Druckniveaus eine Vordruckeinheit verwendet werden, die ein Volumen einer weiteren Kammer z. B. mittels eines Kolbens reduziert, um den Fluiddruck im Vorformling auf das Vor-Druckniveau anzuheben.

Die Vordruckeinheit erzeugt in diesem Beispiel zunächst das Vor-Druckniveau. Danach erzeugt die Druckstoßeinheit den Druckstoß. Die Vordruckeinheit kann nach Beendigung des Druckstoßes z. B. das Vor-Druckniveau halten. Alternativ oder zusätzlich kann die Druckstoßeinheit den Fluiddruck nach dem Druckstoß auf einem zweiten Druckniveau zwischen dem ersten Druckniveau und dem Vor-Druckniveau halten.

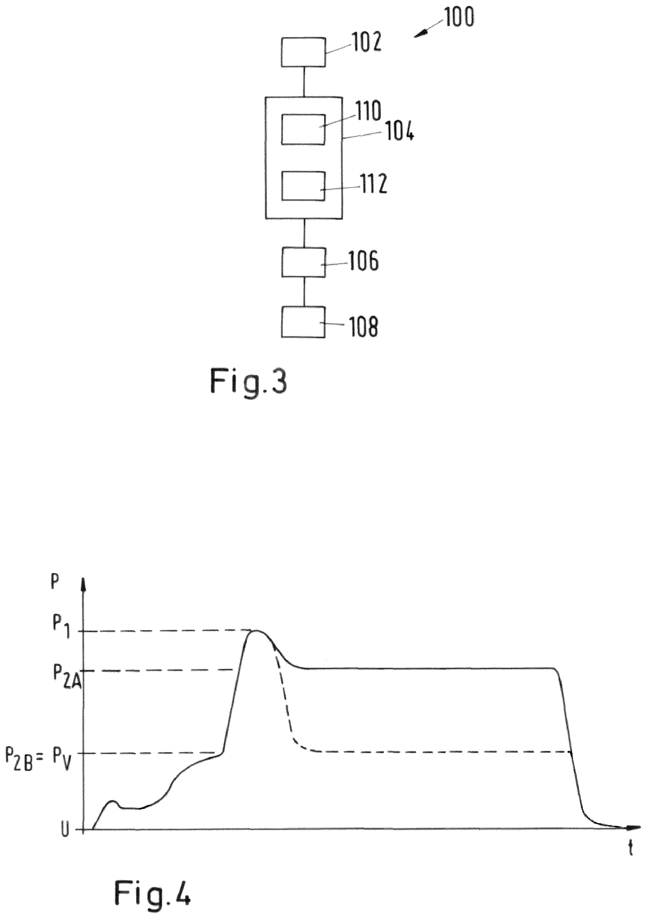

Figur 3 zeigt ein Flussdiagramm des Verfahrens zur Herstellung von Behältern aus Vorformlingen. Das Verfahren wird in seiner Gesamtheit mit dem Bezugszeichen 100 bezeichnet und kann durch die oben erläuterte Steuereinheit 20 ausgeführt werden.

Das Verfahren 100 wird mittels einer Vorrichtung 10 zur Herstellung von Behältern durchgeführt, die oben bereits erläutert wurde. Die Vorrichtung 10 weist dabei zumindest eine Zuleitung 12 zum Zuführen von Fluid und eine Vielzahl von Formeinheiten 14 zur Formung von Behältern aus Vorformlingen 16 mittels des Fluids auf. Mindestens eine der Formeinheiten 14 weist eine fluidkommunizierend mit der Zuleitung verbundene Auslassdüse 18 zum fluidkommunizierenden Verbinden mit einer Mündung 22 eines Vorformlings 16 auf.

In einem ersten Schritt 102 wird die Mündung eines thermisch konditionierten Vorformlings mit der Auslassdüse verbunden. Dies kann zum Beispiel dadurch erfolgen, dass der Vorformling nach dem Durchlaufen einer Heizeinheit, in der er thermisch konditioniert wurde, in eine Formeinheit eingelegt wird. Die Formeinheit kann in einem geöffneten Zustand den Vorformling aufnehmen und in einem geschlossenen Zustand einen Hohlraum bereitstellen, in dem der Vorformling angeordnet sein und zu einem Behälter gereckt werden kann. Im geschlossenen Zustand wird eine mit der Formeinheit verbundene Auslassdüse mit der Mündung des Vorformlings verbunden.

Das Fluid kann ein Gas, zum Beispiel Blasluft, oder eine Flüssigkeit sein, zum Beispiel der vorgesehene Inhalt des herzustellenden Behälters.

In einem weiteren Schritt 104 des Verfahrens 100, wird ein Druckstoß mit dem Fluid erzeugt, wenn der Vorformling in einer Ausformphase ist. Mittels des Druckstoßes wird der Vorformling zu einem Behälter ausgeformt. Weiter treibt der Druckstoß den Fluiddruck des Fluids auf ein erstes Druckniveau, das größer oder gleich 10 bar ist. Das erste Druckniveau kann im Bereich zwischen 10 bar und 50 bar, vorzugsweise zwischen 25 bar und 32 bar liegen.

Der Druckstoß kann zum Beispiel durch den Strömungsdruck der Flüssigkeit während des Einfüllens einer Flüssigkeit in den Vorformling bewirkt werden.

Der Schritt 104 kann weiter die optionalen Unterschritte 110 und 112 aufweisen.

Dabei wird im Unterschritt 110 das Fluid zunächst mit einem Vor-Druckniveau in den Vorformling eingeleitet. Das Vor-Druckniveau weist ein geringeres Druckniveau als das erste Druckniveau auf. Es kann ein Druckniveau aufweisen, das größer als der Umgebungsdruck ist. Mit dem Einleiten des Fluids auf dem Vor-Druckniveau kann der Vorformling zu einem Behälter gestreckt werden, wobei der Behälter durch Fluid noch nicht ausgeformt wird. Damit ist gemeint, dass der noch nicht ausgeformte Behälter noch nicht alle Details der endgültigen Form aufweist.

Im Unterschritt 112 wird nach dem Einleiten des Fluids mit einem Vor-Druckniveau ein Druckstoß in dem Fluid erzeugt, das in dem Fluid angeordnet ist. Der Druckstoß wird dabei mittels einer Druckstoßeinheit generiert.

Mit dem Unterschritt 112 wird ein statischer Druck des Fluids verwendet, um das erste Druckniveau zu erreichen, da das Fluid vor dem Druckstoß in den Vorformling gefüllt wurde und nach dem Füllen des Vorformlings der Druck des in dem Vorformling angeordneten Fluids stoßartig erhöht wird. Durch den Druckstoß wird der Behälter ausgeformt, d. h. seine Wände werden für die Dauer des Druckstoßes mit hohem Druck an die Form gedrückt, so dass die Wände des Behälters an der Form ausgeprägt werden. Die Ausformphase kann mit dem Druckstoß beginnen.

Nach dem Erzeugen des Druckstoßes und dem Ausformen des Behälters aus dem Vorformling wird der Fluiddruck in einer Abkühlphase des ausgeformten Behälters in einem weiteren Schritt 106 abgesenkt. Die Absenkung erfolgt bis auf oder oberhalb eines zweiten Druckniveaus, das höher ist als der Umgebungsdruck und niedriger ist als das erste Druckniveau.

In der Abkühlphase wird der Behälter abgekühlt. Dabei bewirkt das Halten eines Drucks auf oder oberhalb des zweiten Druckniveaus, dass die Wände des Behälters weiter an die Formeinheit gedrückt werden, sodass während der Abkühlphase eine Verformung des Behälters vermieden wird. Das zweite Druckniveau kann dabei in einem Beispiel dem Vor-Druckniveau entsprechen. Es kann in einem anderen Beispiel jedoch auch höher als das Vor-Druckniveau sein.

In einem weiteren Schritt 108 wird nach der Abkühlphase und zu Beginn eine Entnahmephase des Vorformlings aus der Formeinheit der Fluiddruck auf einen Umgebungsdruck abgesenkt. In der Entnahmephase wird der Behälter aus der Formeinheit entnommen. Dies erfolgt, wenn der Fluiddruck in dem Behälter dem Umgebungsdruck entspricht, um Beschädigungen durch eine plötzliche Expansion von in dem Behälter angeordnetem Fluid zu vermeiden.

Die Zeitdauer des Verfahrens 100 zwischen dem Einlassen des Fluids in den Vorformling in der Ausformphase bis zum Beginn des Entlüftens in der Entnahmephase, beträgt zwischen 0,5 s und 5 s, vorzugsweise zwischen 1 s und 3 s, weiter vorzugsweise zwischen 1,1 s und 1,3 s.

Die Ausformphase schließt sich an die Phase an, in der im Behälter das Fluid mit dem Vor-Druckniveau eingeleitet wurde. Das heißt, dass der Druckstoß unmittelbar nach dem anfänglichen Strecken des Behälters erfolgen kann, um den Behälter ausformen bzw. auszuprägen.

Der Druckstoß kann im ersten Drittel der Zeitdauer durchgeführt werden, so dass in den beiden letzten Dritteln der Zeitdauer der Fluiddruck zwischen dem zweiten Druckniveau und dem Umgebungsdruck ist. In den beiden letzten Dritteln kann der Behälter gespült werden. Weiter kann dann eine Kühlung des Behälters erfolgen. Nach dem Spülen des Behälters endet die oben genannte Zeitdauer. Dann kann die Entlüftung des Behälters durchgeführt werden.

Figur 4 zeigt ein Diagramm mit zeitlichen Druckverläufen während der verschiedenen Phasen der Herstellung eines Behälters aus einem thermisch konditionierten Vorformling. Mit dem Einfüllen des Fluids in der Ausformphase steigt der Druck von dem Umgebungsdruck U optional zunächst auf das Vor-Druckniveau Pᵥ.

Zum Ausformen des Behälters aus dem Vorformling wird ein Druckstoß erzeugt, bei dem der Fluiddruck auf das erste Druckniveau P₁ ansteigt. Das erste Druckniveau wird lediglich für einen kurzen Zeitraum gehalten, bis die Ausformung des Behälters vollendet ist. Danach wird der Fluiddruck in der Abkühlphase auf das zweite Druckniveau abgesenkt.

Das zweite Druckniveau kann dabei über dem Vor-Druckniveau liegen und ist in Figur 4 dann mit P_{2A} bezeichnet. Alternativ kann das zweite Druckniveau dabei dem Vor-Druckniveau entsprechen und ist dann in Figur 4 mit P_{2B} bezeichnet.

Nach der Abkühlphase, und zu Beginn der Entnahmephase wird der Fluiddruck weiter auf den Umgebungsdruck abgesenkt. Die Entnahmephase beginnt mit dem Absenken des Fluiddrucks, d. h. die oben genannte Zeitdauer endet mit dem Beginn des Absenkens.

### Bezugszeichenliste

- 10: Vorrichtung
- 12: Zuleitung
- 14: Formeinheit
- 15: Hohlraum
- 16: Vorformling
- 18: Auslassdüse
- 19: Leitung
- 20: Steuereinheit
- 22: Mündung
- 24: Druckstoßeinheit
- 26: Volumen der ersten Kammer
- 27: Volumen der zweiten Kammer
- 28: erste Ventileinheit
- 30: zweite Ventileinheit
- 32: erste Kammer
- 34: zweite Kammer
- 36: Kolben
- 38: elektrischen Antrieb
- 40: Fluidablass
- 42: dritte Ventileinheit
- 44: Druckerzeugungsvorrichtung
- 46: Signalverbindung
- 48: Leitung
- 50: Signalverbindung
- 52: Signalverbindung
- 54: Signalverbindung

## Patentansprüche

1. Verfahren zur Herstellung von Behältern aus Vorformlingen (16) mittels einer Vorrichtung (10) zur Herstellung von Behältern, die eine Zuleitung (12) zum Zuführen von Fluid und eine Vielzahl von Formeinheiten (14) zur Formung von Behältern aus Vorformlingen (16) mittels des Fluids umfasst, wobei mindestens eine Formeinheit (14) eine fluidkommunizierend mit der Zuleitung (12) verbundene Auslassdüse (18) zum fluidkommunizierenden Verbinden mit einer Mündung (22) eines Vorformlings (16) aufweist, wobei das Verfahren (100) die folgenden Schritte umfasst:
- Verbinden (102) der Mündung eines thermisch konditionierten Vorformlings mit der Auslassdüse;
- Erzeugen (104) eines Druckstoßes in einer Ausformphase mit dem Fluid in dem Vorformling zum Ausformen des Behälters aus dem Vorformling, wobei der Druckstoß den Fluiddruck auf ein erstes Druckniveau treibt, das größer als oder gleich 10 bar ist, wobei der Druckverlauf des Fluids durch den Druckstoß eine Druckspitze aufweist, die bis auf das erste Druckniveau steigt;
- Absenken (106) des Fluiddrucks in einer Abkühlphase bis auf oder oberhalb eines zweiten Druckniveaus, das höher ist als der Umgebungsdruck und niedriger ist als das erste Druckniveau, zum Abkühlen des Behälters in der Formeinheit; und
- Absenken (108) des Fluiddrucks auf einen Umgebungsdruck zu Beginn einer Entnahmephase, zur Entnahme des Behälters aus der Formeinheit, wobei der Schritt Erzeugen (104) eines Druckstoßes im ersten Drittel der Zeitdauer zwischen dem Einlassen des Fluids in den Vorformling und dem Schritt Absenken (108) des Fluiddrucks auf einen Umgebungsdruck durchgeführt wird, **dadurch gekennzeichnet, dass** in den beiden letzten Dritteln der Zeitdauer der Fluiddruck zwischen dem zweiten Druckniveau und dem Umgebungsdruck ist.

2. Verfahren nach Anspruch 1, **dadurch gekennzeichnet, dass** das erste Druckniveau durch einen Strömungsdruck des Fluids und/oder einen statischen Druck des Fluids erzeugt wird.

3. Verfahren nach Anspruch 1 oder 2, **dadurch gekennzeichnet, dass** das Fluid eine Flüssigkeit oder ein Gas, vorzugsweise Blasluft, ist.

4. Verfahren nach einem der Ansprüche 1 bis 3, **dadurch gekennzeichnet, dass** der Schritt: Erzeugen (104) eines Druckstoßes, die folgenden Unterschritte aufweist:
- Einleiten (110) des Fluids mit einem Vor-Druckniveau, das geringer als das erste Druckniveau ist, in den Vorformling; und
- Erzeugen (112) des Druckstoßes in dem im Vorformling angeordneten Fluid mittels einer Druckstoßeinheit (24).

5. Verfahren nach Anspruch 4, **dadurch gekennzeichnet, dass** das Vor-Druckniveau dem zweiten Druckniveau entspricht.

6. Vorrichtung zur Herstellung von Behältern, wobei die Vorrichtung (10) eine Zuleitung (12) zum Zuführen von Fluid aus einer Druckerzeugungsvorrichtung und eine Vielzahl von Formeinheiten (14) zur Formung von Behältern aus einem Vorformling (16) mittels des Fluids umfasst, wobei mindestens eine Formeinheit (14) eine fluidkommunizierend mit der Zuleitung (12) verbundene Auslassdüse (18) zum fluidkommunizierenden Verbinden mit einer Mündung (22) eines Vorformlings (16) aufweist, **dadurch gekennzeichnet, dass** die Vorrichtung (10) eine Steuereinheit (20) zum Durchführen des Verfahrens nach einem der vorangegangenen Ansprüche aufweist, wobei die mindestens eine Formeinheit (14) mindestens eine fluidkommunizierend mit der Zuleitung (12) und der Auslassdüse (18) einer Formeinheit (14) verbundene und von der Steuereinheit (20) ansteuerbare Druckstoßeinheit (24) zum Erzeugen des Druckstoßes innerhalb eines ersten Drittels der Zeitdauer zwischen dem Einlassen des Fluids in den Vorformling und dem Absenken des Drucks im Vorformling auf Umgebungsdruck aufweist, wobei die Druckstoßeinheit (24) ein verringerbares Volumen (26) aufweist, das fluidkommunizierend zwischen der Auslassdüse (18) und der Zuleitung (12) angeordnet ist.

7. Vorrichtung nach Anspruch 6 **dadurch gekennzeichnet, dass** die Vorrichtung (10) eine von der Steuereinheit (20) steuerbare erste Ventileinheit (28) zwischen der Druckstoßeinheit (24) und der Auslassdüse (18) aufweist.

8. Vorrichtung nach einem der Ansprüche 6 bis 7, **dadurch gekennzeichnet, dass** die Vorrichtung (10) zwischen der Zuleitung (12) und der Druckstoßeinheit (24) eine von der Steuereinheit (20) steuerbare zweite Ventileinheit (30) aufweist.

9. Vorrichtung nach einem der Ansprüche 6 bis 8, **dadurch gekennzeichnet, dass** die Druckstoßeinheit (24) ein mittels eines Kolbens (36) reduzierbares Volumen (26) aufweist, das fluidkommunizierend zwischen der Auslassdüse (18) und der Zuleitung (12) angeordnet ist.

10. Vorrichtung nach Anspruch 9, **dadurch gekennzeichnet, dass** der Kolben (36) einen elektrischen Antrieb (38), vorzugsweise einen Servomotor, aufweist.

11. Vorrichtung nach einem der Ansprüche 6 bis 10, **dadurch gekennzeichnet, dass** die Vorrichtung (10) einen fluidkommunizierend mit der Auslassdüse (18) verbundenen Fluidablass (40) aufweist, der mittels einer von der Steuereinheit (20) steuerbaren dritten Ventileinheit (42) verschließbar ist.

## Claims

1. Method for producing containers from preforms (16) by a device (10) for producing containers, which comprises a supply line (12) for supplying fluid and a plurality of moulding units (14) for moulding containers from preforms (16) by the fluid, wherein at least one moulding unit (14) has an outlet nozzle (18) connected in fluid-communicating manner to the supply line (12) for fluid-communicating connection to a mouth (22) of a preform (16), wherein the method (100) comprises the following steps:
- connecting (102) the mouth of a thermally conditioned preform to the outlet nozzle;
- generating (104) a pressure surge in a moulding phase with the fluid in the preform for moulding the container from the preform, wherein the pressure surge drives the fluid pressure to a first pressure level which is greater than or equal to 10 bar, wherein the pressure curve of the fluid through the pressure surge has a pressure peak which rises to the first pressure level;
- lowering (106) the fluid pressure in a cooling phase to or above a second pressure level, which is higher than the ambient pressure and lower than the first pressure level, for cooling the container in the moulding unit; and
- lowering (108) of the fluid pressure to an ambient pressure at the beginning of a removal phase, for removing the container from the moulding unit, wherein the step of generating (104) a pressure surge is carried out in the first third of the time period between the admission of the fluid into the preform and the step of lowering (108) the fluid pressure to an ambient pressure, **characterised in that** in the last two thirds of the time period the fluid pressure is between the second pressure level and the ambient pressure.

2. Method according to claim 1, **characterised in that** the first pressure level is generated by a flow pressure of the fluid and/or a static pressure of the fluid.

3. Method according to claim 1 or 2, **characterised in that** the fluid is a liquid or a gas, preferably blowing air.

4. Method according to any one of claims 1 to 3, **characterised in that** the step: generating (104) a pressure surge, comprises the following substeps:
- introducing (110) the fluid at a pre-pressure level lower than the first pressure level into the preform; and
- generating (112) the pressure surge in the fluid arranged in the preform by a pressure surge unit (24).

5. Method according to claim 4, **characterised in that** the pre-pressure level corresponds to the second pressure level.

6. Device for producing containers, the device (10) comprising a supply line (12) for supplying fluid from a pressure generating device and a plurality of moulding units (14) for moulding containers from a preform (16) by the fluid, wherein at least one moulding unit (14) has an outlet nozzle (18) connected in fluid-communicating manner to the supply line (12) for fluid-communicating connection to a mouth (22) of a preform (16), **characterised in that** the device (10) has a control unit (20) for carrying out the method according to one of the preceding claims, wherein the at least one moulding unit (14) comprises at least one pressure surge unit (24) connected in a fluid-communicating manner to the supply line (12) and the outlet nozzle (18) of a moulding unit (14) and controllable by the control unit (20) for generating the pressure surge within a first third of the time period between the admission of the fluid into the preform and the lowering of the pressure in the preform to ambient pressure, the pressure surge unit (24) having a reducible volume (26) which is arranged in a fluid-communicating manner between the outlet nozzle (18) and the supply line (12).

7. Device according to claim 6, **characterised in that** the device (10) has a first valve unit (28), which can be controlled by the control unit (20), between the pressure surge unit (24) and the outlet nozzle (18).

8. Device according to one of claims 6 to 7, **characterised in that** the device (10) has a second valve unit (30), which can be controlled by the control unit (20), between the supply line (12) and the pressure surge unit (24).

9. Device according to one of claims 6 to 8, **characterised in that** the pressure surge unit (24) has a volume (26) which can be reduced by a piston (36) and is arranged in a fluid-communicating manner between the outlet nozzle (18) and the supply line (12).

10. Device according to claim 9, **characterised in that** the piston (36) has an electric drive (38), preferably a servomotor.

11. Device according to one of claims 6 to 10, **characterised in that** the device (10) has a fluid outlet (40) which is connected to the outlet nozzle (18) in a fluid-communicating manner and can be closed by a third valve unit (42) which can be controlled by the control unit (20).

## Revendications

1. Procédé de fabrication de récipients à partir de préformes (16) au moyen d'un dispositif (10) de fabrication de récipients qui comprend une conduite d'alimentation (12) pour l'amenée de fluide et une pluralité d'unités de moulage (14) pour former des récipients à partir de préformes (16) au moyen du fluide, au moins une unité de moulage (14) ayant une buse de sortie (18) connectée en communication de fluide avec la conduite d'alimentation (12) pour la connexion en communication de fluide avec une embouchure (22) d'une préforme (16), le procédé (100) comprenant les étapes suivantes:
- relier (102) l'embouchure d'une préforme conditionnée thermiquement à la buse de sortie;
- générer (104) un coup de bélier dans une phase de formage avec le fluide dans la préforme pour former le récipient à partir de la préforme, le coup de bélier poussant la pression du fluide à un premier niveau de pression supérieur ou égal à 10 bars, la courbe de pression du fluide par le coup de bélier présentant un pic de pression qui augmente jusqu'au premier niveau de pression;
- abaisser (106) la pression du fluide dans une phase de refroidissement jusqu'à ou au-dessus d'un deuxième niveau de pression qui est supérieur à la pression ambiante et inférieur au premier niveau de pression, pour refroidir le récipient dans l'unité de moulage; et
- abaisser (108) la pression du fluide à une pression ambiante au début d'une phase de retrait, pour retirer le récipient de l'unité de moulage, l'étape de génération (104) d'un coup de bélier étant réalisée dans le premier tiers de la durée entre l'admission du fluide dans la préforme et l'étape d'abaissement (108) de la pression du fluide à une pression ambiante, **caractérisé en ce que** dans les deux derniers tiers de la durée, la pression du fluide est comprise entre le deuxième niveau de pression et la pression ambiante.

2. Procédé selon la revendication 1, **caractérisé en ce que** le premier niveau de pression est généré par une pression d'écoulement du fluide et/ou une pression statique du fluide.

3. Procédé selon la revendication 1 ou 2, **caractérisé en ce que** le fluide est un liquide ou un gaz, de préférence de l'air de soufflage.

4. Procédé selon l'une quelconque des revendications 1 à 3, **caractérisé en ce que** l'étape consistant à: générer (104) un coup de bélier, comprend les sous-étapes suivantes:
- l'introduction (110) dans la préforme du fluide ayant un niveau de pression préliminaire inférieur au premier niveau de pression; et
- générer (112) le coup de bélier dans le fluide disposé dans la préforme au moyen d'une unité de coup de bélier (24).

5. Procédé selon la revendication 4, **caractérisé en ce que** le niveau de pression préliminaire correspond au deuxième niveau de pression.

6. Dispositif pour la fabrication de récipients, le dispositif (10) comprenant une conduite d'alimentation (12) pour l'amenée de fluide à partir d'un dispositif de génération de pression et une pluralité d'unités de moulage (14) pour le moulage de récipients à partir d'une préforme (16) au moyen du fluide, au moins une unité de moulage (14) comportant une buse de sortie (18) reliée en communication de fluide avec la conduite d'alimentation (12) pour être reliée en communication de fluide avec une embouchure (22) d'une préforme (16), **caractérisé en ce que** le dispositif (10) comporte une unité de commande (20) pour mettre en œuvre le procédé selon l'une des revendications précédentes, l'au moins une unité de moulage (14) présentant au moins une unité de coup de bélier (24) reliée en communication de fluide avec la conduite d'alimentation (12) et la buse de sortie (18) d'une unité de moulage (14) et pouvant être commandée par l'unité de commande (20) pour générer le coup de bélier dans un premier tiers de la durée entre l'admission du fluide dans la préforme et l'abaissement de la pression dans la préforme à la pression ambiante, l'unité de coup de bélier (24) comprenant un volume réductible (26) disposé en communication de fluide entre la buse de sortie (18) et le conduit d'alimentation (12) .

7. Dispositif selon la revendication 6, **caractérisé en ce que** le dispositif (10) comprend une première unité de soupape (28) pouvant être commandée par l'unité de commande (20) entre l'unité de coup de bélier (24) et la buse de sortie (18).

8. Dispositif selon l'une des revendications 6 à 7, **caractérisé en ce que** le dispositif (10) comporte, entre la conduite d'alimentation (12) et l'unité de coup de bélier (24), une deuxième unité de soupape (30) pouvant être commandée par l'unité de commande (20).

9. Dispositif selon l'une des revendications 6 à 8, **caractérisé en ce que** l'unité de coup de bélier (24) comprend un volume (26) réductible au moyen d'un piston (36), disposé en communication fluidique entre la buse de sortie (18) et la conduite d'alimentation (12).

10. Dispositif selon la revendication 9, **caractérisé en ce que** le piston (36) comporte un entraînement électrique (38), de préférence un servomoteur.

11. Dispositif selon l'une des revendications 6 à 10, **caractérisé en ce que** le dispositif (10) comporte une évacuation de fluide (40) reliée en communication de fluide avec la buse de sortie (18), qui peut être fermée au moyen d'une troisième unité de soupape (42) pouvant être commandée par l'unité de commande (20).
